# EUROPEAN PATENT SPECIFICATION

(11) **EP 1 836 546 B1**
(45) Date of publication and mention of the grant of the patent: **08.08.2018**
(21) Application number: 05805778.7
(22) Date of filing: 24.10.2005
(51) Int. Cl.: G06F 1/20, G06F 1/18

(54) **PIRAMIDAL CASE, FOR COMPUTER, WITH HIGH ABILITY TO DISSIPATE THE HEAT**
PYRAMIDENFÖRMIGES GEHÄUSE FÜR EINEN COMPUTER MIT HOHER WÄRMEABLEITFÄHIGKEIT
BOITIER PYRAMIDAL, POUR ORDINATEUR, A GRANDE CAPACITE DE DISSIPATION DE LA CHALEUR

(30) Priority: 25.10.2004 IT RM20040166 U
(43) Date of publication of application: 26.09.2007
(73) Proprietor: PETRUZZI, Vasco, 00144 Roma (IT)
(72) Inventor: PETRUZZI, Vasco, 00144 Roma (IT); VIGLIANO, Pierfilippo, deceased (IT)
(74) Representative: Raimondi, Adriana
(86) International application number: PCT/IT2005/000616
(87) International publication number: WO 2006/046267

(56) References cited:
- WO-A1-01/01229
- GB-A- 2 271 446
- US-A- 5 940 274
- US-A- 6 113 485
- US-A1- 2004 125 558
- ELLIOTT GOULD:[Online] 25 July 2004 (2004-07-25), XP002364782 Internet Article Retrieved from the Internet: URL:http://www.pbase.com/mrelliottgould/im age/31797646> [retrieved on 2006-01-20]
- ANONYMOUS:[Online] 3 February 2005 (2005-02-03), XP002364783 Internet Article Retrieved from the Internet: URL:http://www.silverpcs.com/product/LUXOR _PYRAMID_SILVER> [retrieved on 2006-01-20] -& ANONYMOUS:[Online] 3 February 2005 (2005-02-03), XP002364904 Internet Article Retrieved from the Internet: URL:http://web.archive.org/web/20050203015 825/http://www.silverpcs.com/> [retrieved on 2006-01-20]

## Description

The present invention concerns a pyramidal case for receiving a computer with high ability to dissipate heat therefrom.

The US 6113 485 discloses the usual air flow cooling system used for cooling integrated circuits. This system uses cooling ducts alone or in combination with cooling fans to lower the temperature of integrated circuits. The cooling duct substantially surrounds the integrated circuit. Cooling air may be convectively conducted through the duct to the integrated circuit. Alternatively, the cooling air is preferably conducted through the duct to the integrated circuit by at least one cooling fan. Additional cooling fans may be placed within the duct or on the exterior of the duct. The duct may extend through the computer case, communicating with air outside the case. Alternatively, the fans may blow the heated air from the duct outside of the computer case.

The invention is defined by the features of claim 1. Advantageous developments of the invention are defined by the dependent claims. The enclosed drawing depicts an embodiment of the invention which is described in the following.

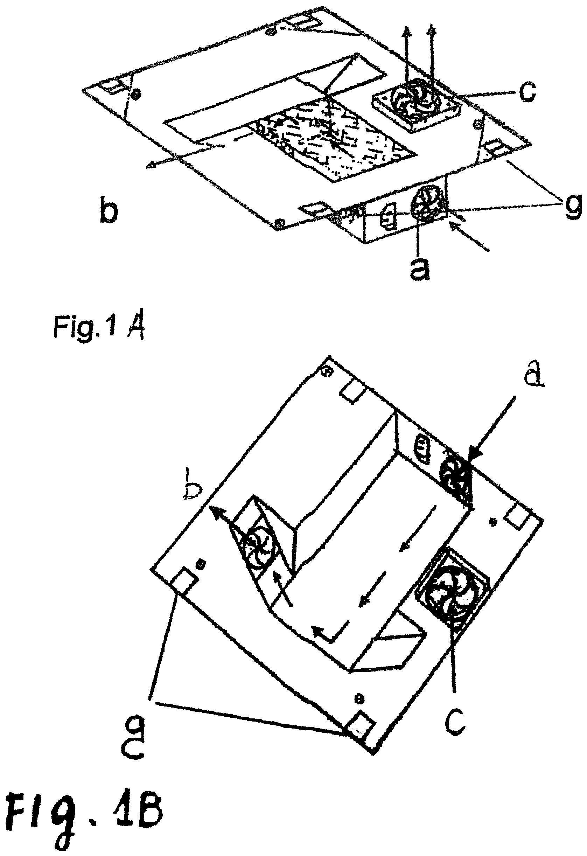

In Fig. 1A and 1B (from a lower point of view) the air intake impeller a of a local power source and the respective incoming air flow are illustrated, the air flow being pushed by the impeller and attracted due to depression by the extraction impeller b, placed in the lateral part of the trapezoidal section of the container for the local power source and the respective outgoing air flow b (from a lower point of view).

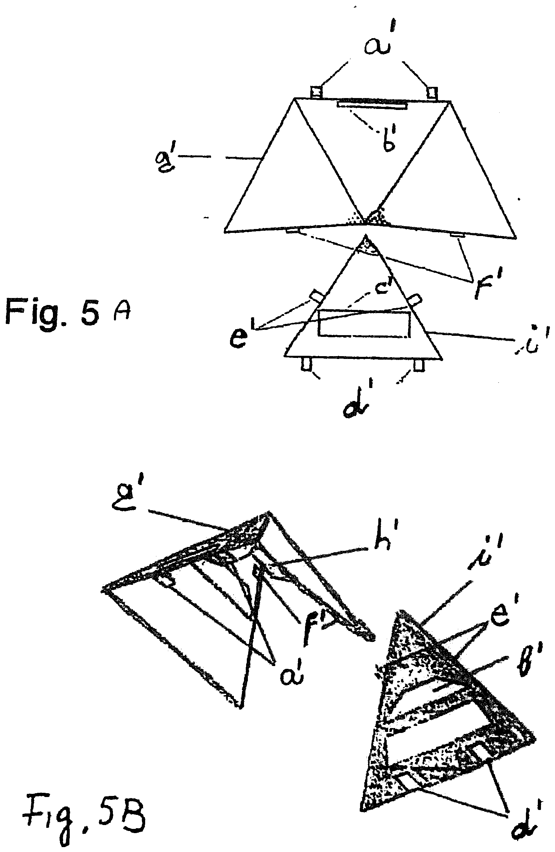

In Fig. 1A and 1B reference sign c depicts the air intake impeller directed to the inside of the case with the respective incoming air flow (from the outside to the inside of the case), reference sign g depicts the recesses of the fitting flaps of the upper part of the case (Fig. 5) respectively in the rear part and in the front part of the base of the pyramidal case. The cover of the local power source independently manages (being isolated) the air flows with respect to the upper part of the pyramidal case, containing the other heat generating components.

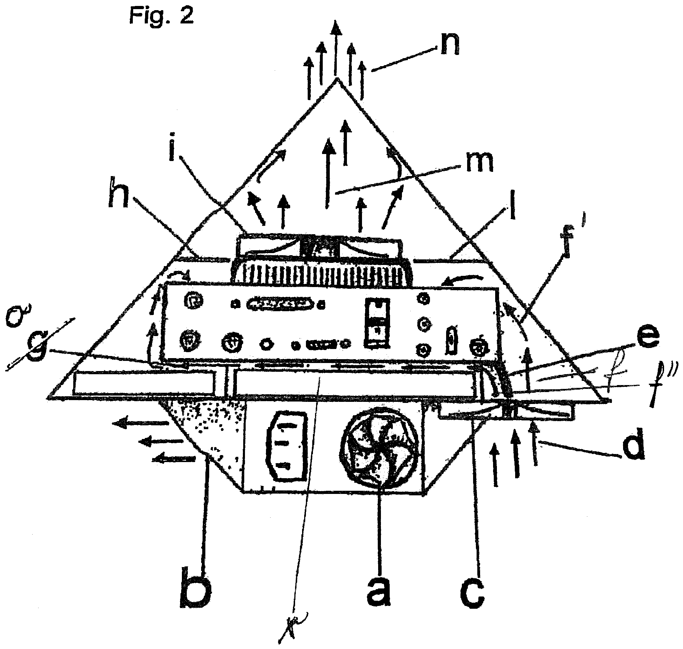

Fig. 2 shows the vertical section of the case, from a rear view, which illustrates the air flows:
Reference sign a depicts the local power source impeller, reference sign b depicts the outgoing air flow from the local power source section, c shows the incoming air impeller section for the inside of the case, and reference sign d depicts the direction and the incoming air flow towards the inside of the case.

In Fig. 2 reference sign e shows an air flow deflector which divides the incoming air flow, respectively, into an air flow f,f" which goes to the upper side of the mother board o and an air flow f" which goes under the mother board o allowing the fresh air mass crossing between the upper part of a slot-in reader and the lower part of the mother board o.

Two further air flow deflectors h and I are placed to the sides of the body of a CPU heat sink q, allowing thanks to the depression caused by aspiration of the impeller which is arranged above said heat sink q a considerable and effective air flow m, which, going by force through heat sink fins, cooling the CPU and creating a warm air flow directed towards the grids placed on the apex of the pyramidal case made to eject the ascending warm air flow n.

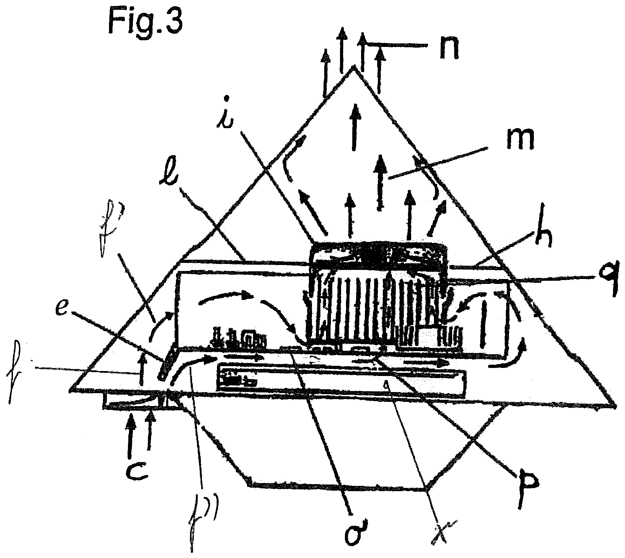

Fig. 3 shows a vertical case section, with front view, which illustrates the air flows. Refence sign c shows the air intake impeller for the inside of the case, and reference sign e depicts an air flow deflector which divides respectively the incoming air flow into the air flow f, f' which goes to the upper side of the mother-board o and into the air flow f" which goes under the mother-board o crossing the frontal section of the motherboard as air flow p which allows the fresh air mass crossing between the upper part of the slot-in reader x and the lower part of the mother-board o and up to the heat sink q .

The air flow deflectors h and I placed to the sides of the body of the heat sink q of the CPU, thanks to the depression caused by aspiration of the impeller i which is arranged above said heat sink q, allow a considerable and an effective air flow m, which, going by force through the heat sink fins cools the CPU and creates the warm air flow m directed towards the grids placed on the apex of the pyramidal case adapted to eject the ascending warm air flow n.

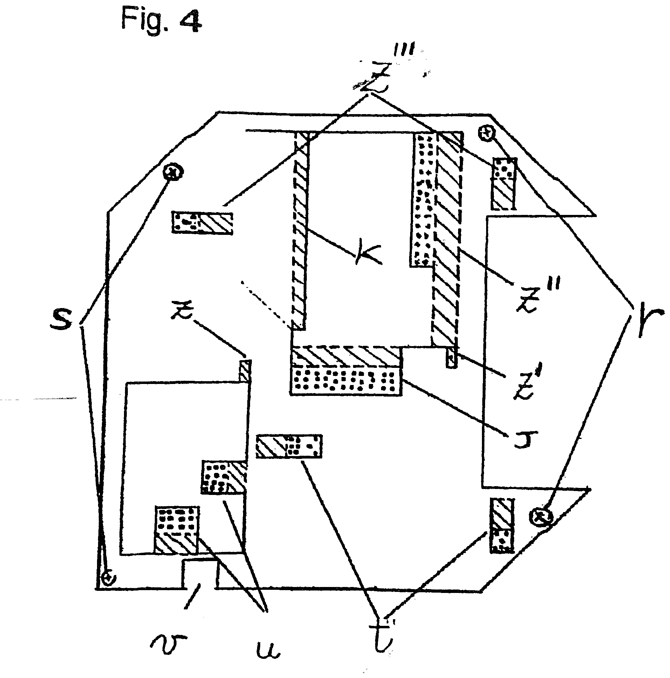

Fig. 4 shows the chassis in plain view on which the inner components of the computer are to be inserted and fixed:
Reference signs r and s depict respectively the implantation screws of the chassis on the local power source container (Fig. 1A, 1B).

With reference signs u, t, j, z", z"', k, z, and z' depict fitting and fixing flaps of the inner components with these common characteristics are depicted: the outlined area shows the flap surface having an inclination of 90° with respect to the plane of the chassis, while the dotted surface of the flap, suitably bent, is parallel to the plane of the chassis. Reference signs u and z depict the hard disk fitting and fixing flaps. Reference signs t and z"' depict mother-board fixing flaps. Reference signs j, z", k and z' depict reader slot-in fitting and fixing flaps.

Fig. 5A shows the upper part of the case, composed from two parts g' and I' (in perspective view). Reference sign b' depicts the opening for CD insertion. Reference sign c' depicts an opening for the mother-board interface. Reference sign a' depicts flaps which allow the connection of a structure g' (Fig. 5g) to the base (as in Fig. 1A and 1B). Reference sign d' depicts flaps which allow the connection to the base (as in Fig.1a and 1B). Reference sign e' depicts flaps which allow the connection of structure i' to structure g' at points f'.

In Fig. 5B structures g' and i' are shown in perspective view forming two elements of the upper part of the case with the fixing flaps a' und d' on respective points g' und I'. Reference sign f' depicts one of the recesses for the flaps e' of the two-upper parts g' and i' of the case. Moreover, the air flow deflectors h' and l' are illustrated.

## Claims

1. A pyramidal case for receiving a computer having a mother-board equipped with a CPU, said pyramidal case comprising a squared base, which has a support on a box, with a rectangular rear section and a trapezoidal front section,
- wherein the motherboard (o) is provided with its lower part above a slot-in reader (CD) above the base of the case, with the CPU carrying a finned heat sink (q) being positioned at the upper side of the mother-board, and
- wherein the following air flow arrangement within the pyramidal case is provided:
• fresh air is sucked in from the outside by an impeller (c) provided in the base of the pyramidal case at one side of the mother-board,
• an air flow deflector (e) is provided at said one side of the mother-board for dividing the sucked-in air into an air flow crossing the space between the lower side of the mother-board and the slot-in reader (CD) at the base of the case and an air flow directed to the upper side of the mother-board,
• a further impeller (i) being provided above the CPU heat sink (q) within a wall defined by two further air flow deflectors (h,l) separating the pyramidal case into a lower and an upper part wherein causing a depression going through the heat sink fins for cooling the CPU and drawing in the air flows at the lower and upper sides of the mother-board, a warm air flow being directed by the further impeller (i) to the apex and expulsed through expulsion grids placed at the apex to the outside of the case.

2. The pyramidal case according to claim 1, wherein a local computer power source is provided within a housing positioned in the base of the pyramidal case, an inflow impeller (a) sucking fresh air into the housing and an expulse impeller (b) expulsing a warm air flow to the outside at a side of the housing distanced from the impeller (c) sucking fresh air into the pyramidal case.

3. The pyramidal case according to any of the preceding claims, wherein at the inside of the base of the pyramidal case spaced below the mother-board (o) a hard-disk is provided at one side of the slot-in reader (CD).

## Patentansprüche

1. Pyramidenförmiges Gehäuse zur Aufnahme eines Computers, der ein mit einer CPU versehenes Mother-Board aufweist, wobei das pyramidenförmige Gehäuse eine einen Kasten tragende quadratische Basis, mit einem rechteckigen hinteren Abschnitt und einem trapezförmigen vorderen Abschnitt,
- wobei das Mother-Board mit einem unteren Teil über einem Slot-In-Kartenleser über der Basis des Gehäuses versehen ist, wobei die CPU einen mit Kühlrippen versehenen Kühlkörper trägt, der auf der Oberseite des Motherboards angeordnet ist, und
- wobei die folgende Luftstromanordnung in dem pyramidenförmigen Gehäuse vorgesehen ist:
• frische Luft wird von der Außenseite durch einen Ventilator angesaugt, der in der Basis des pyramidenförmigen Gehäuses auf einer Seite des Motherboards vorgesehen ist,
• ein Luftstromdeflektor ist auf einer Seite des Mother-Boards vorgesehen, um die angesaugte Luft in einen Luftstrom, die den Raum zwischen der Unterseite des Mother-Boards und dem Slot-In-Kartenleser auf der Basis des Gehäuses durchsetzt und in einen Luftstrom zu unterteilen, die zur Oberseite des Motherboards gerichtet ist,
• wobei ein weiterer Ventilator über dem CPU-Kühlkörper in einer Wand vorgesehen ist, die durch zwei weitere Luftstromdeflektoren festgelegt ist, die das Pyramidengehäuse in einen unteren und einen oberen Teil unterteilen, um einen Unterdruck zu veranlassen, der zum Kühlen der CPU die Kühlkörper-Kühlrippen durchsetzt und die Luftströme an den Unter- und Oberseiten des Mother-Boards einsaugt, wobei ein warmer Luftstrom durch den weiteren Ventilator zum Apex gerichtet und durch Austraggitter zur Außenseite des Gehäuses ausgetragen wird.

2. Pyramidenförmiges Gehäuse nach Anspruch 1, wobei eine integrierte Spannungsversorgung für den Computer in einem Gehäuse vorgesehen ist, das auf der Außenseite der Basis des pyramidenförmigen Gehäuses angeordnet ist, wobei ein Ansaugventilator frische Luft in das Gehäuse saugt und eine Austragventilator einen warmen Luftstrom zur Außenseite auf einer Seite des Gehäuses beabstandet vom Ventilator austrägt, der frische Luft in das pyramidenförmige Gehäuse saugt.

3. Pyramidenförmiges Gehäuse nach einem der vorangehenden Ansprüche, wobei auf der Innenseite der Basis des pyramidenförmigen Gehäuses beabstandet unter dem Mother-Board auf einer Seite des Slot-In-Kartenlesers eine Hard-Disk vorgesehen ist.

## Revendications

1. Boitier pyramidal pour recevoir un ordinateur ayant une carte mère équipée avec un processeur, ledit boitier pyramidal comprenant une base carrée, qui a un support sur une boite, avec une section arrière rectangulaire et une section frontale trapézoïdale,
• dans lequel la carte mère (o) est placée avec sa partie basse située au-dessus d'un lecteur encastré (CD) au-dessus de la base du boitier, avec le processeur portant un dissipateur thermique à ailettes (q) étant positionné sur le dessus de la carte mère, et
• dans lequel l'agencement suivant du flux d'air dans le boitier pyramidal est prévu :
∘ de l'air frais est aspiré de l'extérieur par une pompe (c) placée dans la base du boitier pyramidal d'un côté de la carte mère,
∘ un déflecteur d'air (e) est placé dudit côté de la carte mère pour diviser l'air aspiré en un flux d'air traversant l'espace entre le bas de la carte mère et le lecteur encastré (CD) à la base du boitier et un flux d'air dirigé vers le haut de la carte mère,
∘ une autre pompe (i) étant placée au-dessus du dissipateur thermique du processeur (q) dans un mur défini par deux autres déflecteurs de flux d'air (h, l), séparant le boitier pyramidal en une partie haute et basse dans lequel créant une dépression traversant les pales du dissipateur thermique pour refroidir le processeur et extrayant les flux d'air du haut et du bas de la carte mère, un flux d'air chaud étant dirigé par l'autre pompe (i) jusqu'au sommet et expulsé à travers des grilles d'aération placées au sommet sur l'extérieur du boitier.

2. Boitier pyramidal selon la revendication 1, dans lequel une alimentation locale pour ordinateur est placée dans un logement situé dans la base du boitier pyramidal, un pompe aspirante (a) aspirant de l'air frais dans le logement et une pompe refoulante (b) expulsant un flux d'air chaud à l'extérieur sur le côté du logement à distance de la pompe (c) aspirant de l'air frais dans le boitier pyramidal.

3. Boitier pyramidal selon l'une quelconque des revendications précédentes, dans lequel à l'intérieur de la base de l'espace du boitier pyramidal sous la carte mère (o) un disque dur est placé d'un côté du lecteur encastré(CD).
